# EUROPÄISCHE PATENTSCHRIFT

(11) **EP 2 995 928 B1**
(45) Veröffentlichungstag und Bekanntmachung des Hinweises auf die Patenterteilung: **24.11.2021**
(21) Anmeldenummer: 15184091.5
(22) Anmeldetag: 07.09.2015
(51) Int. Cl.: G01N 11/14

(54) **VISKOSIMETER**
VISCOMETER
VISCOSIMÈTRE

(30) Priorität: 12.09.2014 AT 506352014
(43) Veröffentlichungstag der Anmeldung: 16.03.2016
(73) Patentinhaber: Anton Paar GmbH, 8054 Graz-Straßgang (AT)
(72) Erfinder: BELITSCH, Wolfgang, 8075 Hart bei Graz (AT); LEOPOLD, Bernhard, 8010 Graz (AT)
(74) Vertreter: Wildhack & Jellinek

(56) Entgegenhaltungen:
- EP-A2- 0 926 481
- EP-B1- 0 926 481
- GB-A- 1 244 408
- US-A- 4 375 047
- US-A1- 2003 033 859

## Beschreibung

Es existieren Messsysteme zur Messung von Flüssigkeitseigenschaften, insbesondere der Viskosität, deren zentraler Bestandteil ein mit der zu messenden Flüssigkeit gefüllter, um seine Längsachse rotierender Hohlzylinder ist, in dem ein Messteil drehbar gelagert ist, der bei Rotation des äußeren Messteils bzw. Hohlzylinders über das zu prüfende fluide Medium mitrotiert wird. Dieser Aufbau entspricht im Wesentlichen einem Viskosimeter nach dem Couette-Prinzip, bei dem aus dem sich einstellenden Gleichgewicht zwischen dem mit konstanter Geschwindigkeit rotierten, außen liegenden Hohlzylinder und dem mitbewegten, inneren Messteil auf die Viskosität des Fluids zwischen den konzentrischen Messteilen, bevorzugt Zylinder, geschlossen wird.

Im Folgenden wird immer auf einen Hohlzylinder Bezug genommen, obwohl die Form der Innenfläche dieses außenliegenden Messteils nicht unbedingt zylindrisch sein muss. Gleiches gilt für die Außenfläche des innenliegenden Messteils. Zum Beispiel könnten die beiden Messteile jeweils die Form von zwei mit ihren Kreisflächen aneinander anliegenden Kegelstümpfen besitzen. Der Innenraum des außen liegenden Messteils und die Außenfläche des innen liegenden Messteils sollen zumindest axialsymmetrisch sein bzw. Rotationskörper bezüglich der Längsachse des Hohlzylinders darstellen.

Viskosimeter nach dem Couette-Prinzip sind mit einer Vielzahl von Mess- und Auswertungseinrichtungen bekannt. Beispielsweise kann der sich einstellende Winkel bzw. Nachlaufwinkel zwischen dem rotierenden äußeren und dem mitrotierten inneren Messteil gemessen werden - dabei rotieren beide Messteile mit der gleichen Geschwindigkeit - und daraus die Viskosität der Flüssigkeit ermittelt werden. Eine weitere Methode ist die Messung des auf den innenliegenden Messteil wirkenden Drehmoments, wobei der innenliegende Messteil in Ruhe verbleibt bzw. festgehalten wird. Allgemein werden die ermittelten Daten mit einem Sensor erfasst und an eine Steuer- und Auswerteeinheit übermittelt.

Eine weitere Variante der Messung wird durch Aufbringung eines Bremsmomentes auf den inneren Messteil bzw. Zylinder möglich und aus dem sich einstellenden Drehzahlunterschied der beiden Zylinder bzw. Messteile kann auf die Viskosität des Mediums zwischen den Zylindern geschlossen werden. Derartige Anordnungen werden insbesondere mit horizontaler Drehachse eingesetzt (AT 406425 B8, AT 503994 A1). Weitere Viskosimeter sind aus der AT 507220 B1 bekannt.

Um einen Hohlzylinder aus verschiedenen Gründen ― Probemenge, Reinigung, Thermostatisierung, etc. ― möglichst klein gestalten zu können und in der geschlossenen Zelle oder im Durchfluss messen zu können, ist es von Vorteil, wenn der Hohlzylinder entlang seiner Längs- bzw. Rotationsachse so befüllbar ist, dass die Probeflüssigkeit auf einer Seite in den Hohlzylinder eintritt und auf der gegenüberliegenden Seite austritt. Um ein von Luftblasen freies Nachfüllen der zu messenden Probe ohne zwischenzeitige Reinigung zu ermöglichen, ist es von Vorteil, wenn der Hohlzylinder während der Rotation nicht verschlossen bzw. durchströmt ist. Dies stellt eine Herausforderung an die Dichtung, Lagerung und den Antrieb des Hohlzylinders dar.

Für die Dichtung und Lagerung eines rotierenden Hohlzylinders bietet der Stand der Technik unterschiedliche Möglichkeiten. Sie alle haben den Nachteil, dass eine vollständige Dichtung auf Dauer nicht gewährleistet werden kann. Daher ist es ein Ziel der Erfindung, die Anzahl der zu dichtenden, rotierenden Elemente möglichst klein zu halten.

Die Rotation des Hohlzylinders erfolgt im Allgemeinen mit Hilfe eines Elektromotors, wobei es für die Übertragung der Rotation des Elektromotors auf den Hohlzylinder verschiedene Möglichkeiten gibt.

Möglich ist ein konzentrischer Antrieb. Dabei haben der Hohlzylinder und der Motor eine gemeinsame Rotationsachse. Der Antrieb des Hohlzylinders kann über eine Welle erfolgen. Das hat den Nachteil, dass ein weiteres Dichtelement für die Welle notwendig ist, was zu einer weiteren potentiellen Undichtheitsstelle führt und eine weitere Stelle mit Verschleißteilen verursacht.

Eine weitere Möglichkeit für einen Antrieb ist eine magnetische Kopplung. Die Erfahrung zeigt, dass dies aufgrund der nicht konstanten Reibung an den Lagern des Hohlzylinders zu Rotationspendelbewegungen führt, wodurch eine hinreichend gleichförmige Rotation des Hohlzylinders nicht möglich ist. Außerdem sind die radialen und axialen Kräfte nachteilig für die Lagerung und exakte Messungen.

Exzentrische Antriebe können auf unterschiedliche Weise ausgeführt werden, wie z.B. über Zahnräder, Riemen, usw. Nachteilig daran ist neben den Querkräften, die bei kleinen Ausführungen des Systems für die Lagerung sehr ungünstig sind, dass bei einer eventuellen Undichtheit der rotierenden Dichtung des Hohlzylinders die gegebenenfalls problematische Probenflüssigkeit in Bereiche vordringt, wo sie eine Gefahr darstellen bzw. Schäden verursachen kann. Derartige Anordnungen besitzen den Nachteil, dass zusätzliche Dichtungen und/oder Lagerungen nötig sind.

Aus der JP 2008020465 A ist ein System bekannt, bei dem ein Steppermotor direkt den Messbecher antreibt.

Dokumente EP0926481 A2 und US4375047 A entsprechen relevanten Stand der Technik auf.

Ziel der Erfindung ist vor allem die Erstellung eines Viskosimeters mit einem Antrieb für einen mit Probenflüssigkeit gefüllten Hohlzylinder, welcher Antrieb keine aufwendige Dichtung benötigt, außerdem eine Kapselung des Hohlzylinders erlaubt und selbst bei Undichtheit der Dichtungen ein Austreten der Probenflüssigkeit in Bereiche verhindert, in welche die Probenflüssigkeit nicht gelangen darf. Allenfalls soll eine Thermostatisierung der Probenflüssigkeit zumindest im rotierenden Bereich einfach möglich sein. Auch eine Thermostatisierung des nichtrotierenden Bereichs soll möglich sein.

Diese Ziele werden bei einem Viskosimeter der eingangs genannten Art mit den im Kennzeichen des Patentanspruchs 1 angeführten Merkmalen erreicht. Erfindungsgemäß ist somit vorgesehen, dass zur elektromagnetischen Kopplung des Stators mit dem Rotor zwischen dem Stator und dem Rotor ein vom Stator angetriebener Ringläufer um die Längsachse des Hohlzylinders rotierbar gelagert ist, sodass das Grundgestell und der Hohlzylinder im Hinblick auf den elektromagnetischen Antrieb mechanisch entkoppelt sind und das vorgegebene Drehmoment durch den elektromagnetischen Antrieb auf den Hohlzylinder übertragbar ist und gleichzeitig die axial und radial auf den Hohlzylinder einwirkende Kräfte minimiert sind.

Der Antrieb des erfindungsgemäßen Viskosimeters umfasst somit einen Elektromotor, dessen Stator fest mit dem nicht rotierenden Teil des Messsystems bzw. dem Grundgestell verbunden ist, wogegen der Rotor fest mit dem rotierenden Hohlzylinder verbunden ist. Dabei sind alle Typen von Statoren von Elektromotoren (Gleichstrom-, Synchron-, Asynchron-, Schrittmotor) möglich, die für eine kontinuierliche Rotation eines Rotors bzw. im vorliegenden Fall für den Antrieb des Ringläufers geeignet sind.

Erfindungsgemäß wird verhindert, dass störende Kräfte auf den Hohlzylinder wirken, die die Messung verfälschen. Auch ist der Stator thermisch vom Hohlzylinder getrennt und die Temperierung des Messfluids wird im Regelfall mit einem den Rotor umgebenden Temperierblock erfolgen.

Die Nachteile von bekannten Anordnungen, nämlich zumindest eine zusätzliche Dichtung, die nötig ist, um den Antrieb fluiddicht zu gestalten, werden vermieden.

Aufgrund der thermischen Empfindlichkeit derartiger Messungen und der mechanischen Empfindlichkeit des Messsystems auf Querkräfte, die durch den Antrieb auf den Rotor in das System eingebracht werden können, ist der Einsatz von herkömmlichen Hohlwellenmotoren bzw. von Steppermotoren nicht möglich. Erfindungsgemäß wird jedoch eine mechanische und auch thermische Entkopplung ermöglicht.

Die Erfindung löst somit das Problem, einen speziellen Antrieb für einen vom Grundgestell thermisch und mechanisch entkoppelten Hohlzylinder in einem Viskosimeter mit bevorzugt horizontaler Ausrichtung der Drehachse des Hohlzylinders zu erstellen, da ein direkt am Hohlzylinder sitzender Hohlwellenmotor im Betrieb Wärme produziert und damit die empfindliche und hochgenaue Temperierung des Systems stören würde.

Der wesentliche Nachteil aller bekannten Ausführungsformen wird behoben, nämlich die zwar geringen, aber für eine weitere Miniaturisierung störenden Kräfte in axialer und radialer Richtung. Um diese Kräfte auf die Lagerung des Rotors zu minimieren, ist die Wirbelstromkopplung zwischen dem Ringläufer des elektromagnetischen Antriebs und dem rotierenden Hohlzylinder vorgesehen. Zweckmäßig trägt der Ringläufer des elektromagnetischen Antriebs Permanentmagnete, die den auf dem zu rotierenden Hohlzylinder befindlichen Wirbelstromkörper bzw. Ringflansch antreiben, während der Ringläufer selbst am feststehenden Teil bzw. Grundgestell des Viskosimeters vom Stator rotierbar gelagert ist. Ein weiterer Vorteil dieser Wirbelstromkopplung ist, dass diese dämpfend wirkt und damit störende Drehzahlschwankungen des Elektromotors sich nicht nachteilig auf die Drehzahlstabilität des zu rotierenden Hohlzylinders auswirken. Ein Vorteil von rotierenden Magneten gegenüber einem durch Spulen erzeugten Drehfeld ist, dass für die nötige Magnetfeldstärke die Spulen groß dimensioniert werden müssten und aufgrund der großen, nötigen Leistung beträchtliche Abwärme entstehen würde. Somit sind Permanentmagnete Spulen vorzuziehen.

Um den Stator bzw. die Permanentmagnete und das Lager des Ringläufers vor eventuell aggressiven Proben- oder Reinigungsflüssigkeiten zu schützen, kann eine Membran oder Membranscheibe bzw. fluiddichte Isolierschicht zwischen dem Stator und dem rotierenden System aus Permanentmagneten inklusive Lager einerseits und dem rotierenden Hohlzylinder, der den Wirbelstromkörper trägt, andererseits, vorgesehen sein. Erfindungsgemäß wird ein dreiteiliger Motor erstellt, der aus einer Spulenanordnung eines Stators besteht, die einen gelagerten, umlaufenden Permanentmagneten tragenden Ringläufer antreibt, der seinerseits einen Wirbelstromantrieb des Messbechers bzw. Hohlzylinders realisiert.

Betrachtet man bekannte Hohlmotoren mit Stator plus Spulen und Rotor ― beispielsweise mit Magneten ― so kommt es beim Antrieb zu Slip-Stick-Effekten; es treten sowohl axial als auch radial unerwünscht Kräfte auf. Beide Effekte können die Fluidlager derart, beispielsweise axial, belasten, dass die Lager undicht werden. Durch die radiale Belastung der Lagerung des Hohlzylinders kann die Welle sogar aus der Lagerung springen. Bei der Erfindung werden derartige Belastungen vermieden.

Der erfindungsgemäße Antrieb ermöglicht somit eine weitgehende Miniaturisierung.

Im Folgenden wird ein erfindungsgemäßes Viskosimeter anhand der Zeichnungen beispielsweise näher erläutert.

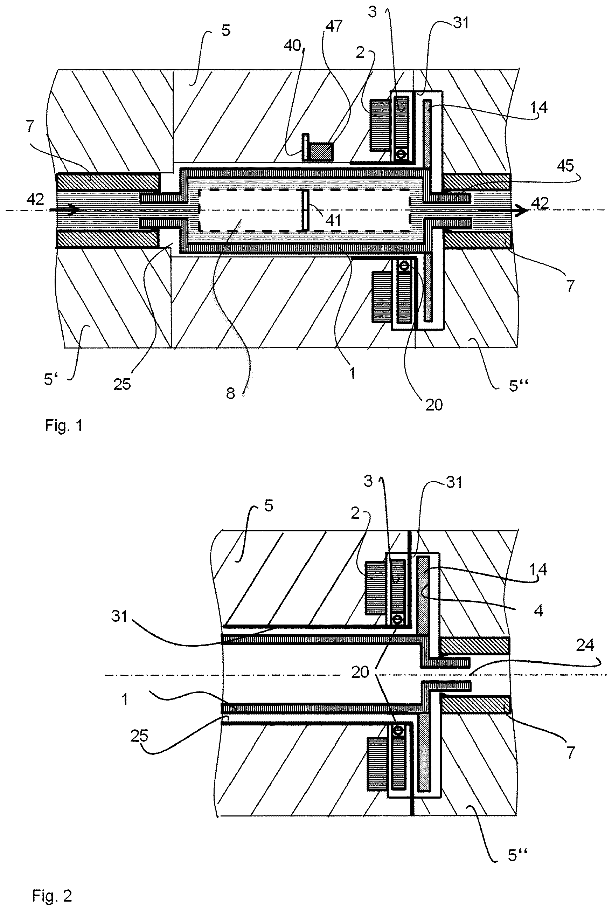

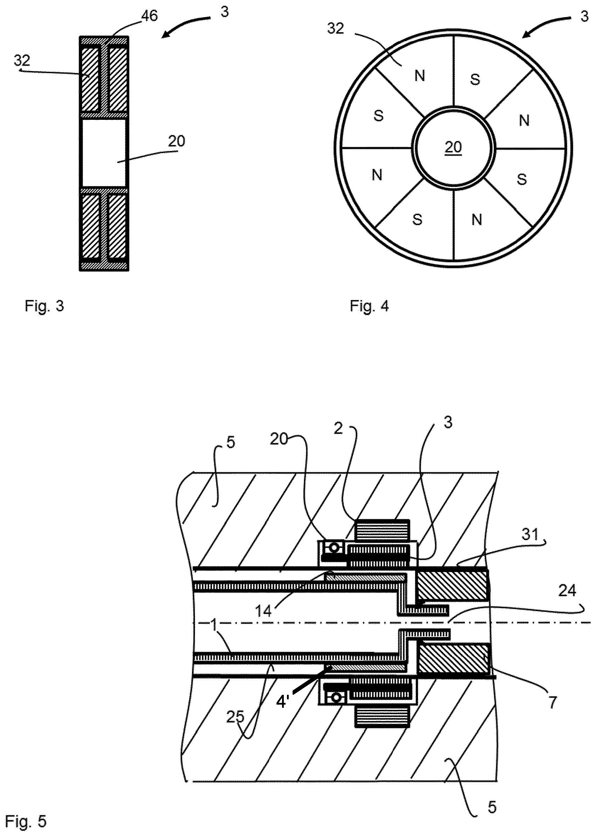

Fig. 1 zeigt einen schematischen Längsschnitt durch den für die Messung wichtigen Abschnitt bzw. Teil des Viskosimeters. Fig. 2 zeigt eine Detailansicht von Fig. 1. Fig. 3 und 4 zeigen Ansichten eines Ringläufers. Fig. 5 zeigt eine alternative Ausführungsform. Steuer- und Antriebseinheiten für den elektromagnetischen Antrieb sowie Detektoren und Auswerteeinheiten für die Messdaten sind nicht dargestellt; diese Baueinheiten und deren Anschluss sind dem Fachmann bekannt.

Wie in **Fig. 1** schematisch dargestellt ist, umfasst das erfindungsgemäße Viskosimeter ein Grundgestell 5, in dem ein vorteilhafterweise zylindrisch ausgebildeter Aufnahme- bzw. Hohlraum 25 ausgebildet ist, von dem ein Hohlzylinder 1 aufgenommen wird. Wie bereits erwähnt, muss dieser Hohlzylinder 1 nicht unbedingt zylindrische Außenform besitzen; die Außenflächen bzw. die Erzeugenden können auch geneigt verlaufen, sodass andere, insbesondere zur Längsachse des Hohlzylinders 1 rotationssymmetrisch ausgebildete, geometrische Körper eingesetzt werden können.

Der Hohlzylinder 1 ist in seinen beiden Endbereichen in Lagern 7 fluiddicht gelagert. Dazu sind an die Endbereiche bzw. Stirnflächen des Hohlzylinders 1 Rohrstutzen 45 angeschlossen oder einstückig angeformt, mit denen der Hohlzylinder 1 in den Lagern 7 gelagert ist. Diese Rohrstutzen 45 ermöglichen ein Durchströmen des Hohlzylinders 1 mit Messfluid, beispielsweise in Richtung des Pfeils 42.

Im Inneren des Hohlzylinders 1 befindet sich ein vorteilhafterweise ebenfalls rotationssymmetrisch, insbesondere zylindrisch, geformter Messteil 8. Dieser Messteil 8 könnte prinzipiell im Querschnitt auch die Form eines Vielecks besitzen.

Für die Messung wird der Hohlzylinder 1 im Innenraum 25 des Grundgestells 5 rotiert. Dabei wird über das den Hohlzylinder 1 durchströmende Messfluid der im Hohlzylinder 1 befindliche Messteil 8 mitrotiert. Der Messteil 8 schwimmt im Fluid und rotiert aufgrund einer Bremswirkung infolge der Wechselwirkung eines im Messteil 8 befindlichen Permanentmagneten 41 mit einem elektrisch leitfähigen mit dem Grundgestell 5 starr verbundenen Wirbelstromkörper 40 bzw. Weicheisenring im Wesentlichen mit einer niedrigeren Geschwindigkeit wie der Hohlzylinder 1. Die Drehzahldifferenz zwischen Hohlzylinder 1 und Messteil 8 kann als Maß für die Viskosität der Flüssigkeit herangezogen und ausgewertet werden. Der Messteil 8 im Innenraum des Hohlzylinders 1 kann bezüglich seiner Lage in Längs- und/oder Querrichtung stabilisiert werden, Beispielsweise können-zusammenwirkende Magnete oder eine Kombination aus einem Weicheisenring 40 am Grundgestell 5 und den Magnet 41 am Messteil 8 vorgesehen sein.

Diese Anordnungen legen den Hohlzylinder 8 vor allem bezüglich seiner axialen Lage bzw. in Längsrichtung des Hohlzylinders 1 fest. Die Drehzahl des Messteils 8 kann beispielsweise mittels eines Hallsensors 47 und des Magneten 41 bestimmt werden. Zum Rotationsantrieb des Hohlzylinders 1 sind im Grundgestell 5 als Stator 2 des eingesetzten elektromagnetischen Antriebs für den Hohlzylinder 8 zumindest eine Spule oder zumindest eine Wicklung oder zumindest ein Elektromagnet angeordnet. Der Antrieb des Hohlzylinders 1 erfolgt jedoch nicht direkt, sondern über einen am Grundgestell 5 mit einem Lager 20 gelagerten Ringläufer 3, der vor dem Stator 2 liegt. Der Ringläufer 3 ist auf dem Grundgestell 5 oder auf einer vom Grundgestell 5 getragenen Drehachse gelagert und trägt Permanentmagnete, Elektromagnete oder Wicklungen, die mit den jeweiligen Permanentmagneten, Elektromagneten oder Wicklungen am Grundgestell 5, d.h. dem Stator 2, zusammenwirken. Der Ringläufer 3 rotiert angetrieben vom Stator 2 um die Längsachse des Hohlzylinders 1 und induziert in einem vom Hohlzylinder 1 getragenen Ringflansch 4 Wirbelströme, die eine Rotation des Ringflansches 4 und des Hohlzylinders 1 bewirken.

Das Grundgestell 5 bzw. der Stator 2 einerseits und der Hohlzylinder 1 andererseits sind somit im Hinblick auf den elektromagnetischen Antrieb mechanisch entkoppelt. Trotzdem kann ein vorgegebenes Drehmoment auf den Hohlzylinder 1 übertragen werden, wobei jedoch gleichzeitig die auf den Hohlzylinder 1 einwirkenden, unerwünschten axialen und radialen Kräfte minimiert sind. Der den Rotor 14 ausbildende Ringflansch 4 ist aus elektrisch leitendem, jedoch nicht magnetischem und nicht magnetisierbarem Material gebildet und vom Ringläufer 3 aufgrund der vom Ringläufer 3 im Ringflansch 4 induzierten Wirbelströme antreibbar.

Für eine Minimierung der auf den Hohlzylinder 1 einwirkenden Kräfte ist vorgesehen, dass der Stator 2, der Ringläufer 3 und der als Ringflansch 4 ausgebildete Rotor 14 am Grundgestell 5 in axialer Richtung des Hohlzylinders 1 aufeinanderfolgend, nebeneinander liegend angeordnet sind.

Ferner ist es zweckmäßig, wenn ― wie in Fig. 1 und 2 dargestellt ― der Stator 2 und der Ringläufer 3 und das den Ringläufer 3 tragende Lager 20 gegenüber dem den Hohlzylinder 1 aufnehmenden Innenraum 25 des Grundgestells 5 fluiddicht, insbesondere mit einer fluiddichten Membran 31, eingekapselt sind. Auf diese Weise ist es möglich, bei einem Austritt von Prüffluid aus dem Hohlzylinder 1 oder bei einem Undichtwerden der Lager 7 für die Rohrstutzen 45 des Hohlzylinders 1 einen Kontakt des Prüffluids mit dem Stator 2 , dem Innenraum 25 des Grundgestells 5 und dem Ringläufer 3 zu vermeiden.

Wie aus **Fig. 1** und **2** ersichtlich, sind der linke und der rechte Abschnitt 5' des Grundgestells 5 vom Grundgestell 5 trennbar bzw. ist das dort befindliche Lager 7 von dem Anschlussstutzen bzw. Rohrstutzen 45 des Hohlzylinders 1 abziehbar, sodass ein Zutritt zum Hohlzylinder 1 bzw. ein Austausch des Lagers 7 möglich ist.

**Fig. 3** und **4** zeigen eine Vordersicht bzw. eine Schnittansicht einer Ausführungsform des Ringläufers 3. Auf einem Lager 20 ist ein ringförmiger Träger 46 gelagert, der beidseits Permanentmagnete 32 trägt, die mit abwechselnder Polung um den Umfang des Trägers 46 auf diesem angeordnet sind. Ein derartiger Ringläufer 3 wird von dem am Grundgestell 5 befindlichen Stator 2 rotiert und rotiert seinerseits wiederum den vom Hohlzylinder 1 getragenen Ringflansch 14.

Fig. 5 zeigt eine alternative Ausführungsform, bei der der vom Lager 20 getragene Ringläufer 3 radial innerhalb des bzw. vor dem Stator(s) 2 liegt. Der Rotor 14 ist von einem Hohlzylinder oder Ringbauteil gebildet, der vom Hohlzylinder 1 getragen ist und diesen umgibt und radial innerhalb des Ringläufers 3 angeordnet ist.

## Patentansprüche

1. Viskosimeter mit einem in einem Grundgestell (5) um seine Längsachse rotierbar gelagerten Hohlzylinder (1), in dem ein, insbesondere zylindrischer, vom zu prüfenden Fluid durchströmbarer Messteil (8) rotierbar gelagert ist, **dadurch gekennzeichnet,**
- **dass** ein elektromagnetischer Antrieb mit einem Stator (2) und einem Rotor (14) für den Hohlzylinder (1) vorgesehen ist, mit dem der Hohlzylinder (1) im Grundgestell (5) rotierbar ist, wobei der Stator (2) des Antriebs am Grundgestell (5) und der Rotor (14) des Antriebs vom Hohlzylinder (1) getragen ist, und
- **dass** zur elektromagnetischen Kopplung des Stators (2) mit dem Rotor (14) zwischen dem Stator (2) und dem Rotor (14) ein vom Stator angetriebener Ringläufer (3) um die Längsachse des Hohlzylinders (1) rotierbar gelagert ist, sodass das Grundgestell (5) und der Hohlzylinder (1) im Hinblick auf den elektromagnetischen Antrieb mechanisch entkoppelt sind und das vorgegebene Drehmoment durch den elektromagnetischen Antrieb auf den Hohlzylinder (1) übertragbar ist und gleichzeitig die axial und radial auf den Hohlzylinder (1) einwirkende Kräfte minimiert sind.

2. Viskosimeter nach Anspruch 1, **dadurch gekennzeichnet, dass** der Hohlzylinder (5) an seinen gegenüberliegenden Endbereichen mit Dichtlagern (7) im Grundgestell (5) fluiddicht rotierbar gelagert ist.

3. Viskosimeter nach Anspruch 1 oder 2, **dadurch gekennzeichnet, dass** der Hohlzylinder (1) insbesondere im Bereich seiner Rotations- bzw. Längsachse an seinen beiden Enden jeweils mit einer Durchströmöffnung (24) oder mit einem Anschlussrohrstutzen (45) versehen ist.

4. Viskosimeter nach einem der Ansprüche 1 bis 3, **dadurch gekennzeichnet,**
- **dass** als Stator (2) des elektromagnetischen Antriebs zumindest eine elektromagnetische Spule oder Wicklung oder zumindest ein Elektromagnet am Grundgestell (5), insbesondere um den Hohlzylinder (1) herum, angeordnet ist, und
- **dass** der Ringläufer (3) Permanentmagnete oder Elektromagnete oder eine Anzahl von Wicklungen aufweist, wobei vorteilhafterweise nebeneinander liegende Permanentmagnete oder Elektromagnete oder Wicklungen an einem Tragring (46) des Ringläufers (3) mit zueinander entgegengesetzter Polung angeordnet sind.

5. Viskosimeter nach einem der Ansprüche 1 bis 4, **dadurch gekennzeichnet,**
- **dass** der Ringläufer (3) auf dem Grundgestell (5) oder einer vom Grundgestell (5) getragenen Drehachse gelagert ist, und/oder
- **dass** die am Ringläufer (3) befindlichen Permanentmagnete, Elektromagnete oder Wicklungen den Spulen bzw. Wicklungen oder Elektromagneten des Stators (2), in axialer oder radialer Richtung des Hohlzylinders (1) gesehen, gegenüberliegend angeordnet sind.

6. Viskosimeter nach einem der Ansprüche 1 bis 5, **dadurch gekennzeichnet, dass** der Rotor (14) ein, vorzugsweise in einem Endbereich des Hohlzylinders (1), direkt vom Hohlzylinder (1) abgehender bzw. getragener Ringflansch (4) oder ein, vorzugsweise in einem Endbereich des Hohlzylinders, von vom Hohlzylinder (1) abgehenden Trägern getragener Ringflansch (4) ist.

7. Viskosimeter nach einem der Ansprüche 1 bis 6, **dadurch gekennzeichnet, dass** der Ringflansch (4) von der Außenwand des Hohlzylinders (1) radial abgeht und sich gegebenenfalls unterbrechungsfrei um den Hohlzylinder (1) herum erstreckt.

8. Viskosimeter nach einem der Ansprüche 1 bis 7, **dadurch gekennzeichnet, dass** der Ringläufer (3) auf einem vom Grundgestell (5) getragenen, insbesondere den Hohlzylinder (1) umgebenden, Lager (20) um den Hohlzylinder (1) rotierbar ist.

9. Viskosimeter nach einem der Ansprüche 1 bis 8, **dadurch gekennzeichnet, dass** der Rotor (14) von einem mit dem Hohlzylinder (1) verbundenen und diesen umgebenden Hohlzylinder oder Ringbauteil (4') gebildet ist, wobei der Ringläufer (3) radial innerhalb des Stators (2) und radial außerhalb des Rotors (14) angeordnet ist bzw. umläuft.

10. Viskosimeter nach einem der Ansprüche 1 bis 9, **dadurch gekennzeichnet, dass** der den Rotor (14) ausbildende Ringflansch (4) oder Ringbauteil (4') aus elektrisch leitendem, vorzugsweise jedoch nicht magnetischem und nicht magnetisierbarem, Material, insbesondere Metall, besteht und vom Ringläufer (3) aufgrund der vom Ringläufer (3) im Ringflansch (4) induzierten Wirbelströme antreibbar ist.

11. Viskosimeter nach einem der Ansprüche 1 bis 10, **dadurch gekennzeichnet, dass** der vom Hohlzylinder (1) getragene Rotor (14) ausschließlich durch die vom Ringläufer (3) im Ringflansch (4) oder Ringbauteil (4') des Rotors (14) induzierten Wirbelströme angetrieben ist.

12. Viskosimeter nach einem der Ansprüche 1 bis 11, **dadurch gekennzeichnet, dass** der Stator (2), der Ringläufer (3) und der als Ringflansch (4) ausgebildete Rotor (14) am Grundgestell (5) in axialer oder radialer Richtung des Hohlzylinders (1) aufeinanderfolgend bzw. nebeneinander liegend angeordnet sind.

13. Viskosimeter nach einem der Ansprüche 1 bis 12, **dadurch gekennzeichnet, dass** der Stator (2) und der Ringläufer (3) und das den Ringläufer (3) tragende Lager (20) gegenüber dem den Hohlzylinder (1) aufnehmenden Innenraum (25) des Grundgestells (5) fluiddicht, insbesondere mit einer fluiddichten Membran (31), abgedeckt bzw. eingekapselt sind.

14. Viskosimeter nach einem der Ansprüche 1 bis 13, **dadurch gekennzeichnet, dass** die Längsachse des Hohlzylinders (1) und die Rotationsachse des Ringläufers (3) zusammenfallen.

## Claims

1. Viscometer having a hollow cylinder (1) rotatably mounted about its longitudinal axis in a base frame (5), in which a, in particular cylindrical, measuring component (8) through which fluid to be tested can flow, is rotatably mounted, **characterised in that**,
- an electromagnetic drive with a stator (2) and a rotor (14) is provided for the hollow cylinder (1), by means of which the hollow cylinder (1) can be rotated in the base frame (5), wherein the stator (2) of the drive is supported on the base frame (5) and the rotor (14) of the drive is supported by the hollow cylinder (1), and that
- to electromagnetically couple the stator (2) to the rotor (14), an annular rotor (3) driven by the stator is rotatably mounted about the longitudinal axis of the hollow cylinder (1) between the stator (2) and the rotor (14), such that the base frame (5) and the hollow cylinder (1) are mechanically decoupled as regards the electromagnetic drive and the specified torque can be transmitted by the electromagnetic drive to the hollow cylinder (1) and, at the same time, the forces acting axially and radially on the hollow cylinder (1) are minimised.

2. Viscometer according to claim 1, **characterised in that** the hollow cylinder (5) is rotatably mounted in a fluid-tight manner at its opposite end regions with sealing bearings (7) in the base frame (5).

3. Viscometer according to claim 1 or 2, **characterised in that** the hollow cylinder (1) is provided with a through-flow opening (24) or with a connecting pipe socket (45) at each of its two ends, in particular in the region of its rotational and/or longitudinal axis.

4. Viscometer according to any of claims 1 to 3, **characterised in that**
- at least one electromagnetic coil or winding or at least one electromagnet is arranged on the base frame (5), in particular around the hollow cylinder (1), as the stator (2) of the electromagnetic drive, and that
- the annular rotor (3) has permanent magnets or electromagnets or a number of windings, wherein adjacent permanent magnets or electromagnets or windings are advantageously arranged with opposite polarity to each other on a support ring (46) of the annular rotor (3).

5. Viscometer according to any of claims 1 to 4, **characterised in that**,
- the annular rotor (3) is mounted on the base frame (5) or an axis of rotation supported by the base frame (5), and/or that
- the permanent magnets, electromagnets or windings of the coils and/or windings or electromagnets of the stator (2) located on the annular rotor (3) are arranged opposite each other, when viewed in the axial or radial direction of the hollow cylinder (1).

6. Viscometer according to any of claims 1 to 5, **characterised in that** the rotor (14) is a ring flange (4) protruding directly from and/or supported by the hollow cylinder (1), preferably in an end region of the hollow cylinder (1), or a ring flange (4) supported by the supports protruding from the hollow cylinder (1), preferably in an end region of the hollow cylinder.

7. Viscometer according to any of claims 1 to 6, **characterised in that** the ring flange (4) protrudes radially from the outer wall of the hollow cylinder (1) and extends, where applicable, without interruption around the hollow cylinder (1).

8. Viscometer according to any of claims 1 to 7, **characterised in that** the annular rotor (3) can be rotated about the hollow cylinder (1) on a bearing (20) supported by the base frame (5), in particular surrounding the hollow cylinder (1).

9. Viscometer according to any of claims 1 to 8, **characterised in that** the rotor (14) is formed from a hollow cylinder or annular component (4') connected to the hollow cylinder (1) and surrounding the latter, wherein the annular rotor (3) is arranged and/or runs radially inside the stator (2) and radially outside the rotor (14).

10. Viscometer according to any of claims 1 to 9, **characterised in that** the ring flange (4) or annular component (4') forming the rotor (14) consists of electrically conductive, but preferably non-magnetic and non-magnetisable material, in particular metal, and can be driven by the annular rotor (3) on the basis of the eddy currents induced in the ring flange (4) by the annular rotor(3).

11. Viscometer according to any of claims 1 to 10, **characterised in that** the rotor (14) supported by the hollow cylinder (1) is driven exclusively by the eddy currents induced in the ring flange (4) or annular component (4') of the rotor (14) by the annular rotor (3).

12. Viscometer according to any of claims 1 to 11, **characterised in that** the stator (2), the annular rotor (3) and the rotor (14) designed as a ring flange (4) are arranged successively and/or adjacent to each other on the base frame (5) in the axial or radial direction of the hollow cylinder (1).

13. Viscometer according to any of claims 1 to 12, **characterised in that** the stator (2) and the annular rotor (3) and the bearing (20) supporting the annular rotor (3) are covered and/or encapsulated in a fluid-tight manner as regards the interior (25) of the base frame (5) housing the hollow cylinder (1), in particular with a fluid-tight membrane (31).

14. Viscometer according to any of claims 1 to 13, **characterised in that** the longitudinal axis of the hollow cylinder (1) and the axis of rotation of the annular rotor (3) coincide.

## Revendications

1. Viscosimètre avec un cylindre creux (1) monté de manière rotative autour de son axe longitudinal dans un châssis de base (5) et dans lequel est montée de manière rotative une pièce de mesure (8), en particulier cylindrique, à travers laquelle un fluide à tester peut s'écouler, **caractérisé en ce que**
- un entraînement électromagnétique avec un stator (2) et un rotor (14) est prévu pour le cylindre creux (1), au moyen duquel le cylindre creux (1) peut tourner dans le châssis de base (5), dans lequel le stator (2) de l'entraînement est porté sur le châssis de base (5) et le rotor (14) de l'entraînement est porté par le cylindre creux (1), et
- un curseur annulaire (3) entraîné par le stator est monté de manière rotative autour de l'axe longitudinal du cylindre creux (1) pour un couplage électromagnétique du stator (2) au rotor (14) entre le stator (2) et le rotor (14), de sorte que le châssis de base (5) et le cylindre creux (1) sont désaccouplés mécaniquement par rapport à l'entraînement électromagnétique et le couple de rotation prédéterminé peut être transmis au cylindre creux (1) par l'entraînement électromagnétique, et en même temps les forces agissant axialement et radialement sur le cylindre creux (1) sont minimisées.

2. Viscosimètre selon la revendication 1, **caractérisé en ce que** le cylindre creux (5) est monté dans le châssis de base (5) de manière rotative et étanche aux fluides avec des revêtements d'étanchéité (7) au niveau de ses zones d'extrémité opposées.

3. Viscosimètre selon la revendication 1 ou 2, **caractérisé en ce que** le cylindre creux (1) est prévu à ses deux extrémités, en particulier dans la zone de son axe de rotation ou de son axe longitudinal, avec une ouverture d'écoulement traversant (24) ou avec une conduite de raccordement (45).

4. Viscosimètre selon l'une quelconque des revendications 1 à 3, **caractérisé en ce que**
- au moins une bobine ou un enroulement électromagnétique ou au moins un électroaimant est agencé sur le châssis de base (5), en particulier autour du cylindre creux (1), en tant que stator (2) de l'entraînement électromagnétique, et
- le curseur annulaire (3) présente des aimants permanents ou des électroaimants ou un certain nombre d'enroulements, dans lequel des aimants permanents ou des électroaimants ou des enroulements avantageusement adjacents sont agencés sur un anneau de support (46) du curseur annulaire (3) avec une polarité opposée les uns aux autres.

5. Viscosimètre selon l'une quelconque des revendications 1 à 4, **caractérisé en ce que**
- le curseur annulaire (3) est monté sur le châssis de base (5) ou sur un axe de rotation supporté par le châssis de base (5), et/ou
- les aimants permanents, les électroaimants ou les enroulements situés sur le curseur annulaire (3) sont agencés à l'opposé des bobines ou des enroulements ou des électroaimants du stator (2), en regardant dans une direction axiale ou radiale du cylindre creux (1).

6. Viscosimètre selon l'une quelconque des revendications 1 à 5, **caractérisé en ce que** le rotor (14) est une bride annulaire (4), de préférence dans une zone d'extrémité du cylindre creux (1), qui s'étend à partir de ou est portée directement sur le cylindre creux (1), ou une bride annulaire (4), de préférence dans une zone d'extrémité du cylindre creux, qui est portée sur des supports s'étendant à partir du cylindre creux (1).

7. Viscosimètre selon l'une quelconque des revendications 1 à 6, **caractérisé en ce que** la bride annulaire (4) fait saillie radialement par rapport à la paroi extérieure du cylindre creux (1) et s'étend le cas échéant sans interruption autour du cylindre creux (1).

8. Viscosimètre selon l'une quelconque des revendications 1 à 7, **caractérisé en ce que** le curseur annulaire (3) peut tourner autour du cylindre creux (1) sur un palier (20) qui est porté par le châssis de base (5) et qui entoure en particulier le cylindre creux (1).

9. Viscosimètre selon l'une quelconque des revendications 1 à 8, **caractérisé en ce que** le rotor (14) est formé par un cylindre creux ou un élément annulaire (4') qui est relié au cylindre creux (1) et entoure celui-ci, dans lequel le curseur annulaire (3) est agencé ou tourne radialement à l'intérieur du stator (2) et radialement à l'extérieur du rotor (14).

10. Viscosimètre selon l'une quelconque des revendications 1 à 9, **caractérisé en ce que** la bride annulaire (4) ou l'élément annulaire (4') formant le rotor (14) est constitué(e) d'un matériau électriquement conducteur, mais de préférence non magnétique et non magnétisable, en particulier de métal, et peut être entraîné(e) par le curseur annulaire (3) en raison des courants de Foucault induits par le curseur annulaire (3) dans la bride annulaire (4).

11. Viscosimètre selon l'une quelconque des revendications 1 à 10, **caractérisé en ce que** le rotor (14) porté par le cylindre creux (1) est entraîné exclusivement par les courants de Foucault induits par le curseur annulaire (3) dans la bride annulaire (4) ou l'élément annulaire (4') du rotor (14).

12. Viscosimètre selon l'une quelconque des revendications 1 à 11, **caractérisé en ce que** le stator (2), le curseur annulaire (3) et le rotor (14) réalisé sous la forme d'une bride annulaire (4) sont agencés les uns à la suite des autres ou les uns à côté des autres dans la direction axiale ou radiale du cylindre creux (1).

13. Viscosimètre selon l'une quelconque des revendications 1 à 12, **caractérisé en ce que** le stator (2) et le curseur annulaire (3) et le palier (20) portant le curseur annulaire (3) sont recouverts ou encapsulés de manière étanche aux fluides, en particulier avec une membrane étanche aux fluides (31), par rapport à l'espace intérieur (25) du châssis de base (5) recevant le cylindre creux (1).

14. Viscosimètre selon l'une quelconque des revendications 1 à 13, **caractérisé en ce que** l'axe longitudinal du cylindre creux (1) et l'axe de rotation du curseur annulaire (3) sont confondus.
